# EUROPEAN PATENT APPLICATION

(11) **EP 1 944 533 A1**
(43) Date of publication of application: **16.07.2008**
(21) Application number: 06822751.1
(22) Date of filing: 01.11.2006
(51) Int. Cl.: F16J 15/32

(54) **SEALING DEVICE**

(30) Priority: 04.11.2005 JP 2005320945
(71) Applicant: NOK Corporation, Minato-ku Tokyo 105-8585 (JP)
(72) Inventor: KANZAKI, Go, Fukushima-shi Fukushima 960-1102 (JP); KOBAYASHI, Naoto, Fukushima-shi Fukushima 960-1102 (JP); MUNEKATA, Shinobu, Fukushima-shi Fukushima 960-1102 (JP)
(74) Representative: TBK-Patent
(86) International application number: PCT/JP2006/321822
(87) International publication number: WO 2007/052685

(57) **Abstract**

Sealing devices (1) in which, when they are stacked in the axial direction, a grease (G) applied to sealing lips (12) and (13) of each sealing device (1) is prevented from coming into contact with and adhering to an attachment ring (11) of an adjacent sealing device (1). The sealing device (1) comprises an attachment ring (11) and, united therewith, sealing lips (12) and (13) made of a rubbery elastic material. It has a projection (17) made of a rubbery elastic material and located along the periphery of the attachment ring (11). When such sealing devices (1) are stacked in the axial direction, the projection (17) serves as a holding part to come into contact with the attachment ring (11) of the adjacent sealing device (1) located on the side which the sealing lips (12) and (13) face, whereby necessary gaps (δ₁) and (δ₂) are held between the grease (G) applied to the sealing lips (12) and (13) and that adjacent attachment ring (11).

## Description

### BACKGROUND OF THE INVENTION

### Field of the Invention

The present invention relates to a sealing device in which sealing is made by seal lips.

### Description of the Conventional Art

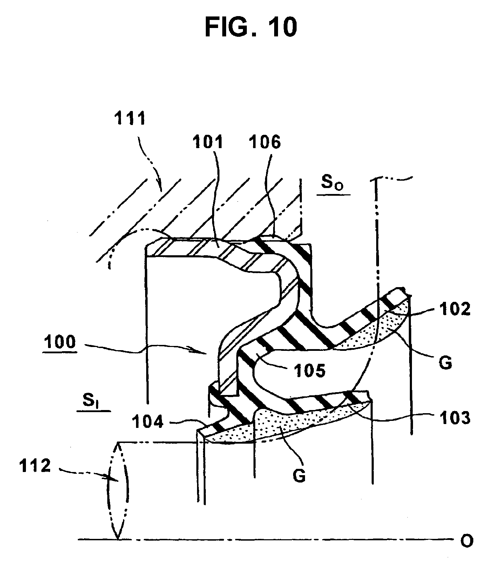

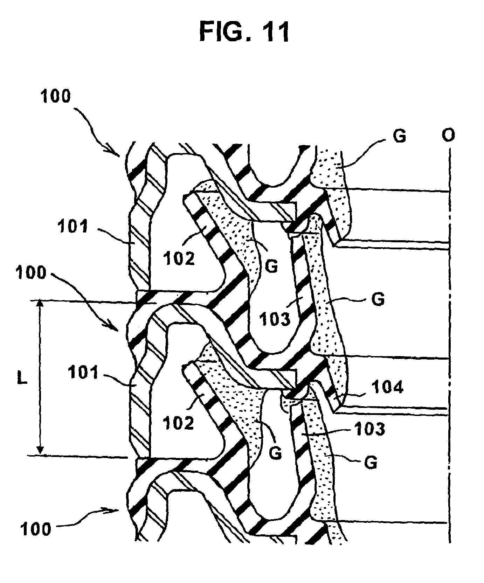

Fig. 10 is a half cross sectional view showing a sealing device having a conventional structure for sealing a bearing portion rotatably supporting a wheel to a wheel suspension device for a motor vehicle by cutting it along a plane passing through an axis O thereof, and Fig. 11 is a half cross sectional view showing a state in which the sealing devices in Fig. 10 are stacked, by cutting them along the plane passing through the axis O. The sealing device 100 is also called as a hub seal, is installed between an outer ring 111 of a bearing and an end portion of a hub 112 at the inner peripheral side which are relatively rotated around the axis O, as shown in Fig. 10, and prevents a muddy water or the like from making an intrusion into a bearing inner portion S_{I} from a bearing outer portion So.

In detail, the sealing device 100 is provided with a metal attaching ring 101 pressure inserted and fitted to an inner peripheral surface of an end portion of the outer ring 111 of the bearing, and an outer peripheral side seal lip 102, an inner peripheral side seal lip 103 and a grease lip 104 which are integrally formed on the attaching ring 101 by a rubber-like elastic material. The leading ends of the outer peripheral side seal lip 102 and the inner peripheral side seal lip 103 are slidably brought into close contact with a curved surface of the hub 112, and a gasket portion 106, which are formed in an outer peripheral end portion of a common base portion 105 of the outer peripheral side seal lip 102, the inner peripheral side seal lip 103 and the grease lip 104, is brought into close contact with an inner peripheral surface of the end portion of the outer ring 111 of the bearing with a suitable collapsing margin (refer, for example, to the following patent document).

Patent Document 1: Japanese Unexamined Patent Publication No. 2003-222145

Patent Document 2: Japanese Unexamined Patent Publication No. 2003-254441

In this kind of sealing device 100, grease G is previously applied to inner peripheral surfaces of the outer peripheral side seal lip 102 and from the inner peripheral side seal lip 103 to the grease lip 104, which are sliding portions with the hub 112.

However, at a time of stacking the sealing device 100 as shown in Fig. 11 for delivery, there is a case that the grease G previously applied to the outer peripheral side seal lip 102 and the inner peripheral side seal lip 103 comes into contact with an attaching ring 101 in a sealing device 100 stacked above them so as to be attached. The attachment of the grease G occurs in the case that the seal lips 102 and 103 come too close to the attaching ring 101 above them at a time of stacking the sealing devices 100, or in the case that the upper and lower sealing devices 100 are deviated in a diametrical direction. Accordingly, it is necessary to wipe out the grease G attached to the attaching ring 101 at each time of installing the device between the outer ring 111 of the bearing and the hub 112, and a complication of a work is compelled.

Further, in order to prevent the grease G from being attached, it is effective to make a length L in an axial direction of the outer peripheral portion of the attaching ring 101 long to some extent so that a suitable gap is formed between the outer peripheral side seal lip 102 and the inner peripheral side seal lip 103, and the attaching ring 101 of the sealing device 100 stacked above them, at a time of stacking the sealing devices 100 as shown in Fig. 11, however, since an installation space with respect to the bearing is limited, it is hard to elongate the length L in the axial direction of the attaching ring 101.

### SUMMARY OF THE INVENTION

### Problem to be Solved by the Invention

The present invention is made by taking the points mentioned above into consideration, and a technical problem of the present invention is to prevent grease applied to seal lips from coming into contact with an attaching ring of an adjacent sealing device so as to be attached, at a time of stacking the sealing devices in an axial direction.

### Means for Solving the Problem

As a means for effectively solving the technical problem mentioned above, in accordance with claim 1 of the present invention, there is provided a sealing device having seal lips made of a rubber-like elastic material and integrally provided on an attaching ring, wherein a retention portion is provided for retaining desired gaps between grease applied to the seal lips and an adjacent sealing device at the side to which the seal lips are directed, by coming into contact with the attaching ring of the adjacent sealing device when the sealing devices are stacked in an axial direction, and the retention portion is made of a rubber-like elastic material and is formed so as to be positioned at an outer peripheral portion of the attaching ring.

In accordance with claim 2 of the present invention, there is provided the sealing device as recited in claim 1, wherein the retention portion is constituted by a projection.

In accordance with claim 3 of the present invention, there is provided the sealing device as recited in claim 1, wherein the retention portion is constituted by an annular step portion which is formed in a base portion rubber layer adhered to the attaching ring and is capable of being engaged with an end portion of the attaching ring in a diametrical direction.

### Effect of the Invention

In accordance with the sealing device on the basis of the present inventions described in claims 1 to 3, since the desired gap is formed between grease applied to the seal lips, and the attaching ring of the adjacent sealing device at the side to which the seal lips are directed, at a time of stacking the sealing devices in the axial direction, it is possible to prevent the grease from coming into contact with the adjacent attaching ring so as to be attached. Further, this effect can be achieved without elongating the length in the axial direction of the attaching ring.

### BRIEF EXPLANATION OF DRAWINGS

Fig. 1 is a half cross sectional view of an installation state showing a preferable first embodiment of the sealing device in accordance with the present invention by cutting it along a plane passing through an axis O;
Fig. 2 is a half cross sectional view showing a state in which the sealing devices in Fig. 1 are stacked, by cutting them along the plane passing through the axis O;
Figs. 3 (A) and 3 (B) are explanatory views showing examples of cross sectional shapes of the projection in the sealing device in Fig. 1;
Fig. 4 is an explanatory view showing an example of a layout of the projection in the sealing device in Fig. 1;
Fig. 5 is an explanatory view showing an example of the layout of the projection in the sealing device in Fig. 1;
Fig. 6 is an explanatory view showing an example of the layout of the projection in the sealing device in Fig. 1;
Fig. 7 is a half cross sectional view showing an installation process of the sealing device in Fig. 1 by cutting it along the plane passing through the axis O;
Fig. 8 is a half cross sectional view of an installation state showing a preferable second embodiment of the sealing device in accordance with the present invention by cutting it along a plane passing through an axis O;
Fig. 9 is a half cross sectional view showing a state in which the sealing devices in Fig. 8 are stacked, by cutting them along the plane passing through the axis O;
Fig. 10 is a half cross sectional view of an installation state showing a sealing device having the conventional structure by cutting it along a plane passing through an axis O; and
Fig. 11 is a half cross sectional view showing a state in which the sealing devices in Fig. 10 are stacked, by cutting them along the plane passing through the axis O.

### Description of Reference Numerals

- 1: sealing device
- 11: attaching ring
- 11a: outer peripheral tube portion
- 11b: outer peripheral throttle tube portion
- 11c: intermediate portion
- 11d: inner peripheral conical tube portion
- 11e: inner peripheral collar portion
- 11f: end portion
- 12: outer peripheral side seal lip
- 13: inner peripheral side seal lip
- 14: grease lip
- 15: base portion rubber layer
- 16: gasket portion
- 17: projection (retention portion)
- 18: annular step portion
- 2: outer ring of bearing
- 3: hub
- 4: jig
- 4a: clearance groove (or concave portion)
- S_{I}: bearing inner portion
- S_{O}: bearing outer portion
- G: grease
- δ₁, δ₂: gap

### DETAILED DESCRIPTION OF PREFERRED EMBODIMENT

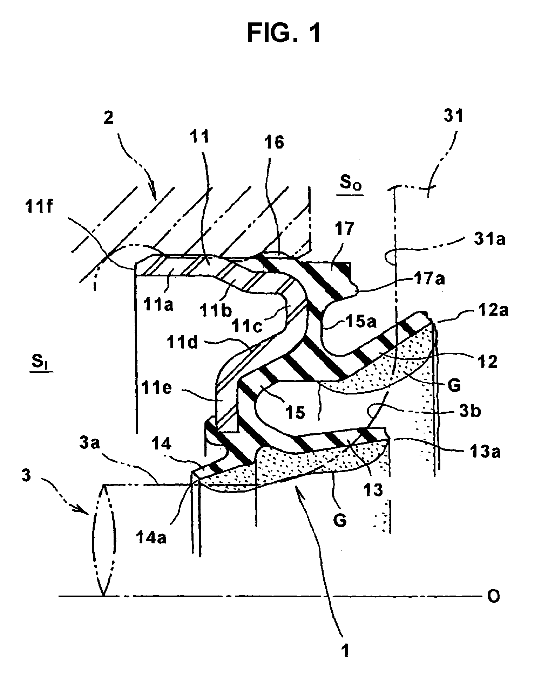

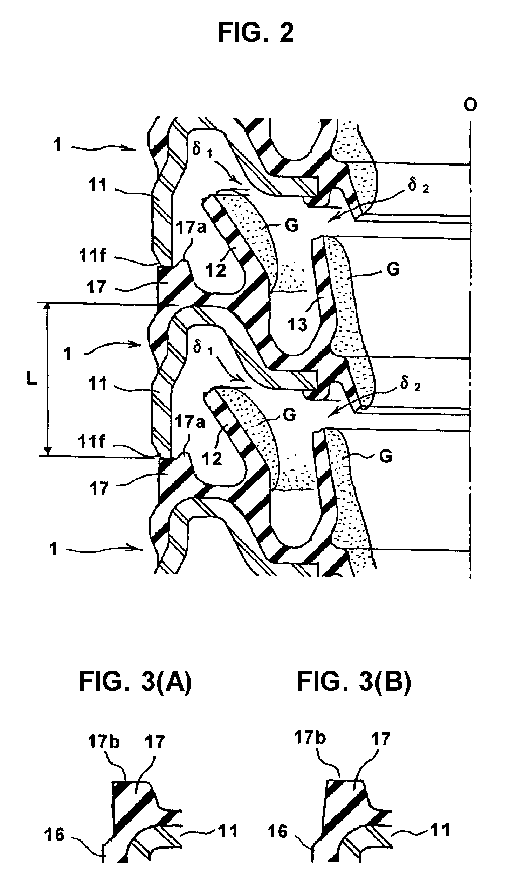

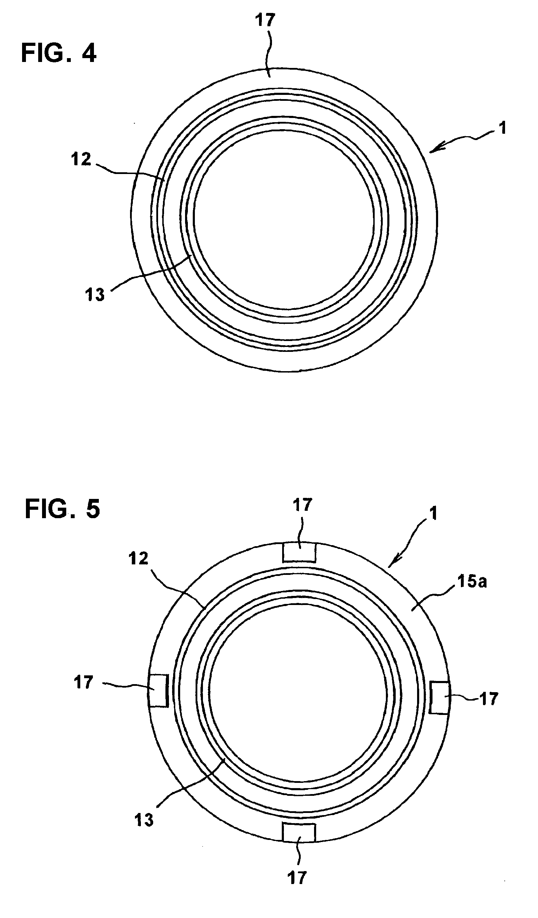

Fig. 1 is a half cross sectional view of an installation state showing a preferable embodiment of the sealing device in accordance with the present invention by cutting it along a plane passing through an axis O, Fig. 2 is a half cross sectional view showing a state in which the sealing devices in Fig. 1 are stacked, by cutting them along the plane passing through the axis O, Figs. 3 (A) and 3 (B) are explanatory views showing examples of cross sectional shapes of the projection, and Figs. 4, 5 and 6 are explanatory views showing examples of layouts of the projection in the sealing device in Fig. 1.

A sealing device 1 in accordance with the embodiment shown in Fig. 1 is provided with a metal attaching ring 11, which is pressure inserted and fitted to an inner peripheral surface of an end portion of an outer ring 2 of a bearing, and an outer peripheral side seal lip 12, an inner peripheral side seal lip 13 and a grease lip 14 which are integrally formed on the attaching ring 11 by a rubber-like elastic material.

The attaching ring 11 is manufactured by punching and press molding a metal plate such as a steel plate or the like, and is constituted by an outer peripheral tube portion 11a which is pressure inserted and fitted to an inner peripheral surface of the outer ring 2 of the bearing, an outer peripheral throttle tube portion 11b which is formed therefrom in such a manner that its diameter becomes small toward a bearing outer portion So side, an intermediate portion 11c which extends from a small-diameter end portion thereof to an inner peripheral side, an inner peripheral conical tube portion 11d which is formed in such a manner that its diameter becomes small gradually from an inner periphery of the intermediate portion toward the bearing inner portion S_{I} side, and an inner peripheral collar portion 11e which extends from the small-diameter end portion of the inner peripheral conical tube portion to an inner peripheral side.

Each of the outer peripheral side seal lip 12, the inner peripheral side seal lip 13 at the inner peripheral side thereof, and the grease lip 14 provided at the bearing inner portion S_{I} side of the inner peripheral side seal lip 13 extends from a base portion rubber layer 15 which is vulcanized and adhered in such a manner as to cover a surface from an outer peripheral surface of the outer peripheral throttle tube portion 11b to an inner peripheral end portion of the inner peripheral collar portion 11e in the attaching ring 11. An outer peripheral portion of the base portion rubber layer 15 extending beyond the outer peripheral side of the inner peripheral conical tube portion 11d in the attaching ring 11 forms a gasket portion 16 which is brought into close contact with the inner peripheral surface of the outer ring 2 of the bearing with a suitable collapsing margin.

The outer peripheral seal lip 12 is formed in a gentle conical tube shape, a diameter of which is larger at a leading end portion 12a side, and is structured such that the leading end portion 12a and the vicinity thereof are slidably brought into close contact with an inner surface 31a of a flange 31, which is approximately perpendicular to an axis, in a state of being suitably bent and deformed with respect to the flange 31 in the hub 3.

The inner peripheral side seal lip 13 protrudes so as to be formed in an approximately cylindrical shape from a position which is closer to the inner peripheral side than a root of the outer peripheral side seal lip 12 in the base portion rubber layer 15 toward an opposite side to the bearing inner portion S_{I}. The hub 3 is structured such that a transition portion between a cylindrical outer peripheral surface 3a extending from a track portion retaining spherical bodies of the bearing and the inner surface 31a of the flange 31 forms a continuous curved surface 3b, and the leading end portion 13a of the inner peripheral side seal lip 13 is slidably brought into close contact with the curved surface 3b with a suitable fastening margin.

The grease lip 14 provided at the side closest to the bearing inner portion S_{I} extends from an inner peripheral end portion of the base portion rubber layer 15 toward the bearing inner portion S_{I} side, and a leading end portion 14a thereof is slidably brought into close contact with the cylindrical outer peripheral surface 3a of the hub 3 with a slight fastening margin, or closely opposes thereto with a slight gap.

A projection 17 serving as the retention portion described in claim 1 is formed at a position corresponding in a diametrical direction to the outer peripheral tube portion 11 of the attaching ring 11 in the end surface 15a facing to the bearing outer portion So side of the base portion rubber layer 15. In particular, the projection 17 is structured such as to have a necessary height for retaining desired gaps δ₁ and δ₂ between the outer peripheral side seal lip 12 and the inner peripheral side seal lip 13, and the attaching ring 11 which is adjacent thereto in their extending direction, by coming into contact with an end portion 11f at the bearing inner portion S_{I} side of the attaching ring 11 of the adjacent sealing device 1, in a state of being stacked in an axial direction as shown in Fig. 2, and has a protrusion portion 17a which is loosely fitted to an inner peripheral side of the end portion 11f of the outer peripheral tube portion 11a in the attaching ring 11 at a time of stacking the sealing device 1 in the axial direction as shown in Fig. 2.

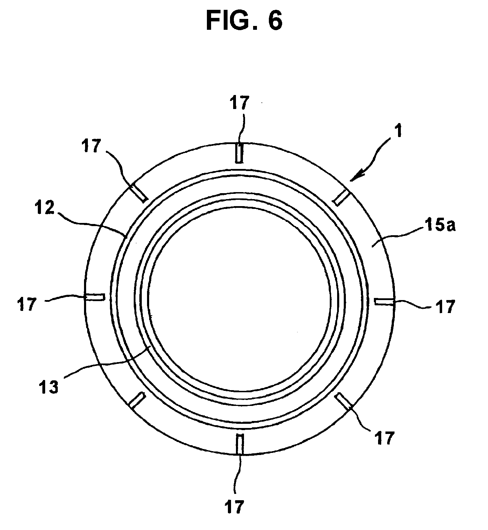

Further, the projection 17 may be continuously provided annularly in a circumferential direction as shown in Fig. 4, or the projections 17 may be formed at a uniform interval in the circumferential direction as shown in Fig. 5 or 6.

The sealing device 1 having the structure mentioned above is fitted to an inner peripheral surface of the outer ring 2 of the bearing at the outer peripheral tube portion 11a of the attaching ring 11, and seals a gap between the device and the outer ring 2 by a gasket portion 16 of the base portion rubber layer 15. Further, the outer peripheral side seal lip 12 and the inner peripheral side seal lip 13 prevent a dust, a muddy water or the like from making an intrusion into the bearing inner portion S_{I} from a space between the outer ring 2 and the flange 31, by being slidably brought into close contact with the inner surface 31a of the flange 31 and the curved surface 3b of the hub 3.

Since the inner surface of the flange 31 of the hub 3 applies centrifugal force to fluid or a foreign material coming into contact with the inner surface, the muddy water or the like which is going to make an intrusion into the sliding portion between the leading end portion 12a of the outer peripheral side seal lip 12 and the inner surface of the flange 31 through the space between the outer ring 2 and the flange 31 is thrown off by the centrifugal force so as to be excluded to the outer peripheral side. Further, if a slight amount of muddy water or the like passes through the sliding portion between the outer peripheral side seal lip 12 and the flange 31 toward the inner peripheral side, the muddy water or the like is sealed by the sliding portion between the inner peripheral side seal lip 13 and the curved surface 3b of the hub 3. As a result, the slight amount of muddy water or the like is pushed back to the sliding portion between the outer peripheral side seal lip 12 and the flange 31 by the centrifugal force, and is further discharged to the outer periphery thereof.

In the sealing device 1, grease G is previously applied to the inner peripheral surfaces of the outer peripheral side seal lip 12 and from the inner peripheral side seal lip 13 to the grease lip 14, which are sliding portions with the hub 3, before being delivered to a user. Further, at a time of delivery, the sealing devices 1 are set to be in a state that a plurality of sealing devices 1 are stacked in the axial direction as shown in Fig. 2. However, in accordance with this embodiment, since the end portion 11f of the attaching ring 11 of the sealing device 1 existing at the relatively upper side in Fig. 2 is supported on the projection 17 of the sealing device 1 existing at the relatively lower side in the stacking state, the outer peripheral side seal lip 12 extends toward a position at an outer peripheral side than the inner peripheral conical tube portion 11d in the attaching ring 11 at the upper side of the outer peripheral side seal lip 12, and the leading end of the inner peripheral side seal lip 13 does not reach the upper side sealing device 1. Accordingly, the desired gaps δ₁ and δ₂ are retained between the grease G applied to the inner peripheral surfaces of the outer peripheral side seal lip 12 and the inner peripheral side seal lip 13, and the attaching ring 11 at the upper side thereof, and the end portion 11f of the attaching ring 11 is loosely fitted to the protrusion portion 17a at the inner peripheral side of the projection 17. Therefore, the upper and lower adjacent sealing devices 1 and 1 are not deviated from each other in the diametrical direction.

Accordingly, it is possible to effectively prevent the grease G applied to the outer peripheral side seal lip 12 and the inner peripheral side seal lip 13 of the relatively lower side sealing device 1 from coming into contact with the inner peripheral conical tube portion 11d and the inner peripheral collar portion 11e of the attaching ring 11, the end portion 15b of the base portion rubber layer 15 around the inner periphery of the attaching ring 11 and the like in the sealing device 1 stacked on the relatively lower side sealing device 1.

Accordingly, a work for wiping off the grease G attached to the attaching ring 11 is not necessary at a time of installing the device into the inner periphery of the outer ring 2 of the bearing, and it is possible to lighten a load at a time of the installation work. Further, since this effect can be achieved without elongating the length L in the axial direction of the outer peripheral portion of the attaching ring 11, there is no problem due to constraint of an installation space at the inner periphery of the outer ring 2.

Further, the projection 17 is structured such as to prevent the sealing devices 1 from being deviated from each other in the diametrical direction, by being formed in the shape having the protrusion portion 17a which is loosely fitted to the inner peripheral side of the end portion 11f of the outer peripheral tube portion 11a in the attaching ring 11, at a time of stacking the sealing devices 1 in the axial direction as shown in Fig. 2. However, in the case that the projection 17 has a sufficient height such that the outer peripheral side seal lip 12 and the inner peripheral side seal lip 13 do not interfere with the attaching ring 11 at the upper side thereof even if the upper and lower adjacent sealing devices 1 and 1 are deviated from each other in the diametrical direction, the projection 17 may be formed such that the leading end surface 17b is flat, that is, its cross section has an approximately trapezoidal shape, as exemplified in Figs. 3A and 3B.

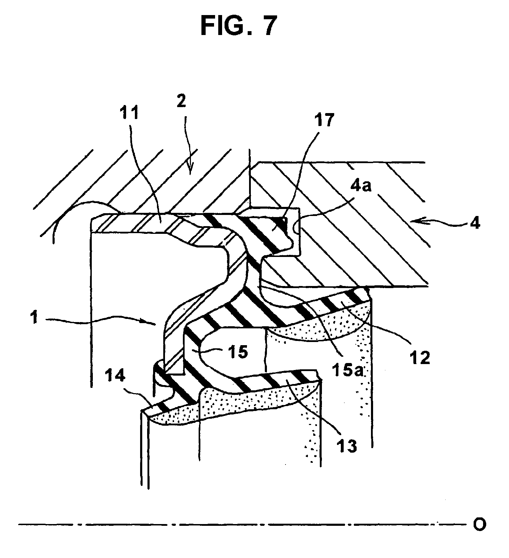

Fig. 7 is a half cross sectional view showing an installation process of the sealing device in Fig. 1 by cutting it along a plane passing through the axis. As shown in Fig. 7, a jig 4 is used for installing the sealing device 1 in the inner periphery of the outer ring 2 of the bearing. The jig 4 in the illustrated embodiment is structured such that a clearance groove (or concave portion) 4a, into which the projection 17 enters, is formed so as to press the end surface 15a of the base portion rubber layer 15 while avoiding the projection 17. However, in the case that a width in the diametrical direction (a thickness in the diametrical direction) of the projection 17 is large, and the projection 17 is provided continuously in the circumferential direction as shown in Fig. 4, rigidity against a load in the axial direction is comparatively large. Therefore, the projection 17 may be pressed by using a normal jig 4, in which the clearance groove (or the concave portion) 4a is not formed, for installing the sealing device 1.

Further, rigidity against a load in the axial direction is small in the case that the projection 17 is comparatively thin in the diametrical direction even if it is provided continuously in the circumferential direction, and in the case that the projections 17 are arranged at a uniform interval in the circumferential direction and thin in the circumferential direction as shown in Fig. 6. In such cases, the projection 17 may be pressed in a collapse state by using the normal jig 4, in which the clearance groove (or the concave portion) 4a is not formed, for installing the sealing device 1. In this case, needless to say, the number and the thickness of the projections 17 are set so as to have such a level of support force that the projection is not easily collapsed by the weight from the upper side sealing devices 1, at a time of stacking a plurality of sealing devices 1 as shown in Fig. 2.

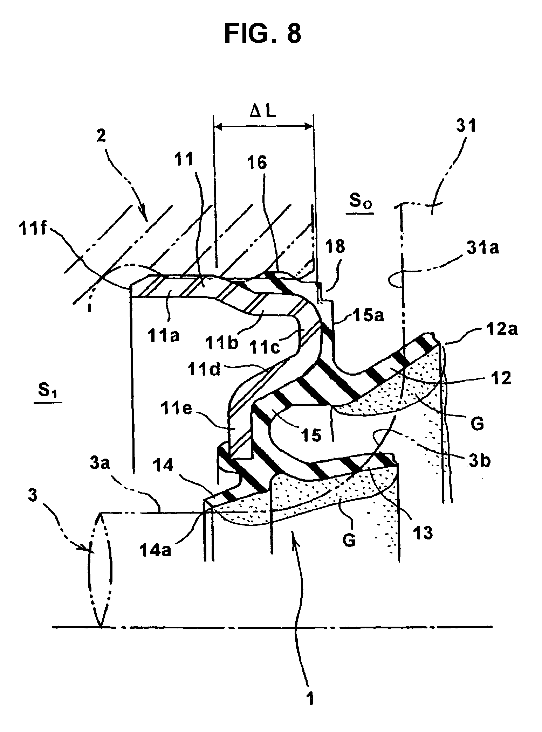

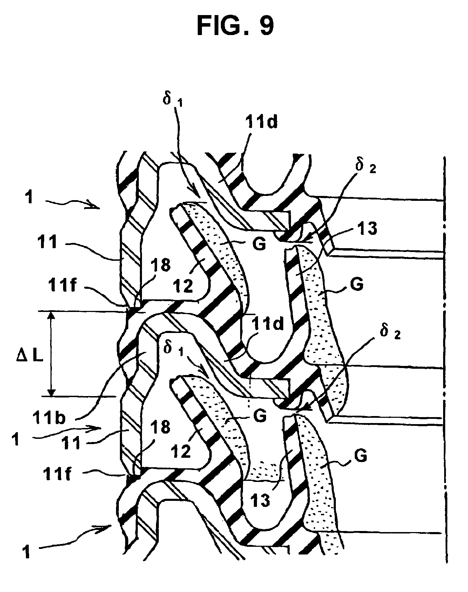

Next, Fig. 8 is a half cross sectional view of an installation state showing a preferable second embodiment of the sealing device in accordance with the present invention by cutting it along a plane passing through an axis O, and Fig. 9 is a half cross sectional view showing a state in which the sealing devices in Fig. 8 are stacked, by cutting them along the plane passing through the axis O.

This second embodiment is different from the first embodiment mentioned above in a point that a length ΔL in the axial direction of the outer peripheral throttle tube portion 11b in the attaching ring 11 is made slightly longer than that in Fig. 1, and an annular step portion 18, which is loosely fitted to and engaged with the inner periphery of the end portion 11f of the outer peripheral tube portion 11a in the attaching ring 11 at a time of stacking the sealing devices 1 in the axial direction as shown in Fig. 2, is formed as the retention portion described in claim 1, at a position corresponding in the diametrical direction to the outer peripheral tube portion 11a of the attaching ring 11 in the end surface 15a facing to the bearing outer portion So side of the base portion rubber layer 15. The other portions are structured basically in the approximately same manner as Fig. 1.

The sealing device 1 provided with the structure mentioned above achieves the same sealing function as the first embodiment described above.

Further, in the case that a plurality of sealing devices 1 are stacked in the axial direction as shown in Fig. 9 at a time of delivery, the leading end of the outer peripheral side seal lip 12 of the sealing device 1 existing at the relatively lower side extends toward a space at the outer peripheral side of the inner peripheral conical tube portion 11d in the attaching ring 11 of the sealing device 1 existing at the relatively upper side, however, the end portion 11f of the attaching ring 11 of the sealing device 1 existing at the relatively upper side is loosely fitted to and engaged with the annular step portion 18 of the sealing device 1 existing at the relatively lower side, whereby the desired gaps δ₁ and δ₂ are retained between the grease G applied to the inner peripheral surfaces of the outer peripheral side seal lip 12 and the inner peripheral side seal lip 13, and the attaching ring 11 above the grease G, and the upper and lower adjacent sealing devices 1 and 1 are not deviated from each other in the diametrical direction. Accordingly, it is possible to effectively prevent the grease G applied to the outer peripheral side seal lip 12 and the inner peripheral side seal lip 13 of the relatively lower side sealing device 1 from coming into contact with the inner peripheral conical tube portion 11d and the inner peripheral collar portion 11e of the attaching ring 11, and the end portion 15b and the like of the base portion rubber layer 15 around the inner periphery of the attaching ring 11 in the sealing device 1 stacked above the grease so as to be attached.

In this embodiment, the gaps δ₁ and δ₂ at a time of stacking as shown in Fig. 9 are made as large as possible, by making the length ΔL in the axial direction of the outer peripheral throttle tube portion 11b in the attaching ring 11 slightly longer than that of Fig. 1, however, the gaps δ₁ and δ₂ may be made as large as possible on the basis of the depth of the annular step portion 18, without changing the length ΔL in the axial direction.

### Industrial Applicability

In accordance with the present invention, it is possible to provide the sealing device in which the grease applied to the seal lip does not come into contact with the attaching ring of the adjacent sealing device at a time of being stacked in the axial direction.

## Claims

1. A sealing device (1) comprising a seal lips (12, 13) made of a rubber-like elastic material and integrally provided on an attaching ring (11), wherein a retention portion is provided for retaining desired gaps (δ₁, δ₂) between grease (G) applied to the seal lips (12, 13) and an adjacent sealing device (1) at the side to which the seal lips (12, 13) are directed, by coming into contact with the attaching ring (11) of said adjacent sealing device (1) when the sealing devices (1) are stacked in an axial direction, and the retention portion is made of a rubber-like elastic material and is formed so as to be positioned at an outer peripheral portion of the attaching ring (11).

2. The sealing device as claimed in claim 1, wherein the retention portion is constituted by a projection (17).

3. The sealing device as claimed in claim 1, wherein the retention portion is constituted by an annular step portion (18) which is formed in a base portion rubber layer (15) adhered to the attaching ring (11) and is capable of being engaged with an end portion (11f) of the attaching ring (11) in a diametrical direction.
